# FASCICULE DE BREVET EUROPEEN

(11) **EP 3 870 919 B1**
(45) Date de publication et mention de la délivrance du brevet: **23.11.2022**
(21) Numéro de dépôt: 19790546.6
(22) Date de dépôt: 24.10.2019
(51) Int. Cl.: F27B 3/22, F27D 3/16, F27D 99/00, F23D 14/22, F23D 14/32, F23L 7/00

(54) **ORGANE D'INJECTION DE GAZ, FOUR MUNI D'UN TEL ORGANE ET SON UTILISATION**
GASINJEKTIONSELEMENT, OFEN MIT EINEM SOLCHEN ELEMENT UND DESSEN VERWENDUNG
GAS INJECTION MEMBER, FURNACE PROVIDED WITH SUCH A MEMBER AND USE THEREOF

(30) Priorité: 25.10.2018 BE 201805739
(43) Date de publication de la demande: 01.09.2021
(73) Titulaire: Soudobeam SA, 4140 Sprimont (BE)
(72) Inventeur: THOMAS, Jean-Philippe, 4140 Sprimont (BE)
(74) Mandataire: Calysta NV
(86) Numéro de dépôt international: PCT/EP2019/079084
(87) Numéro de publication internationale: WO 2020/084076

(56) Documents cités:
- WO-A1-2011/044676
- DE-A1-102016 211 477
- DE-B- 1 068 948
- DE-U1-202007 019 294
- DE-U1-202017 107 810
- JP-A- 2014 196 545
- JP-A- 2015 161 460
- US-A1- 2015 285 502

## Description

La présente invention est relative à un organe d'injection de gaz comprenant :
- une paroi tubulaire susceptible d'être sollicitée thermiquement et présentant une extrémité proximale et une extrémité distale,
- à cette extrémité distale, au moins une ouverture d'extrémité par laquelle au moins un gaz est projeté, et
- un système de refroidissement qui est logé dans ladite paroi tubulaire et comporte des canaux axiaux qui, entre une terminaison proximale et une terminaison distale, s'étendent axialement vers ladite extrémité distale de la paroi tubulaire et dans lesquels un fluide de refroidissement est amené à circuler, des canaux de liaison reliant circonférentiellement entre eux des canaux axiaux susdits à leur terminaison distale, ces canaux de liaison présentant une forme arrondie en direction de l'extrémité distale de la paroi tubulaire.

De tels organes d'injection de gaz sont utilisés notamment dans le segment électrique de la production d'acier, plus particulièrement en four électrique. Dans un four à arc électrique, chaque cycle de fabrication, appelé « coulée », comporte quatre étapes, le chargement des mitrailles, leur fusion, l'affinage de l'acier fondu et le déversement hors de four.

L'étape de fusion est principalement concernée par l'apport de chaleur de la manière la plus efficace possible en vue d'accélérer la fusion des mitrailles solides. Elle prend l'énergie pour cela de 3 apports : les arcs électriques développés dans le four, les flammes provenant de brûleurs placés sur les parois du four et les réactions de décarburation et d'oxydation du fer.

L'étape d'affinage donne la priorité à une réaction chimique d'oxydation du carbone et d'autres éléments chimiques par l'oxygène apporté. L'affinage tire son énergie chimique de la projection d'oxygène à vitesse supersonique vers le bain de métal en fusion.

Divers accessoires sont nécessaires en fonction des spécificités du procédé de chaque aciérie, accessoires qui, la plupart, sont fixés aux parois latérales du four et soufflent en angle vers le bain. Parmi ces accessoires on distingue les brûleurs, qui projettent un gaz combustible et de l'oxygène comme comburant de manière à former une flamme. Des brûleurs combinés sont aussi prévus, qui non seulement peuvent produire une flamme, mais en outre peuvent projeter de l'oxygène supersonique vers le bain.

Les brûleurs ou brûleurs combinés sont des éléments essentiels de productivité et de qualité de l'élaboration d'acier en four à arc électrique.

En tant qu'élément d'apport thermique, et en tant qu'élément de projection du moteur de réaction d'affinage, c'est-à-dire l'oxygène, le brûleur doit être dimensionné de façon dédiée au procédé mis en œuvre et au convertisseur.

Le problème consiste tant à assurer les caractéristiques et qualités des brûleurs que de les conserver dans le temps au cours d'une campagne de milliers de coulées afin de pérenniser les différents rendements du convertisseur.

En effet, au cours des cycles thermo-mécaniques induits par la succession des coulées, le brûleur s'use par érosion et fissuration par suite de sollicitations nombreuses et variées. Des sollicitations thermiques sont dues au rayonnement du bain, à la flamme, à l'atmosphère, au retour de flamme par rebond sur la mitraille, à la proximité de l'arc électrique et au recouvrement par de la scorie moussante chaude. Des sollicitations mécaniques peuvent apparaître également, telles que les cycles de dilatation et de retrait, l'impact des mitrailles, les coups d'arc.

Pour résister à ces sollicitations le brûleur doit être refroidi par un fluide de refroidissement. Les zones les plus rudement sollicitées sont en général le front du brûleur faisant face à l'intérieur du four, c'est-à-dire son extrémité distale, et l'intérieur du brûleur ou de sa chambre de mélange exposés à la flamme du brûleur.

Des tentatives pour porter remède à ces problèmes sont déjà connues.

On peut citer par exemple des systèmes de refroidissement de brûleur dans lesquels un fluide de refroidissement circule dans des canaux coaxiaux disposés périphériquement dans la paroi externe de l'injecteur (voir WO2007/100441 et US2010/0252968). Un fluide de refroidissement froid est injecté dans le canal central d'un de ces canaux coaxiaux vers l'extrémité distale de l'injecteur. Là, après échange de chaleur, il est retourné par le canal coaxial qui entoure le canal central en devant exécuter un changement de sens de déplacement de 180° de manière abrupte. De cette disposition il résulte, à l'extrémité distale des canaux coaxiaux, c'est-à-dire là où le refroidissement devrait être le plus performant, la formation d'un moussage du fluide de refroidissement, généralement de l'eau. Ce fluide en mousse est isolant thermiquement et devrait être évité. De plus, par la disposition coaxiale des canaux, le fluide chaud du canal coaxial de retour effectue un échange thermique avec le fluide parcourant le canal central, avant que celui-ci n'aboutisse à la zone la plus fortement sollicitée thermiquement ce qui est évidemment également peu souhaitable.

On connaît également une enveloppe de refroidissement pour brûleur formée de plusieurs segments longitudinaux agencés côte à côte (v. US5176875 et DE20 2007 019294 U1). Deux canaux dans lesquels circule un fluide de refroidissement s'étendent axialement dans chaque segment de cette enveloppe. Ces deux canaux axiaux sont mis en communication par un canal transversal foré perpendiculairement à eux. Le fluide de refroidissement entre par l'un des canaux axiaux et sort par l'autre, en étant soumis à un changement de sens de déplacement abrupt avec formation ici aussi d'un moussage thermiquement isolant. L'autre inconvénient de cet assemblage réside dans le fait que les multiples interfaces entre segments longitudinaux mis côte à côte représentent autant d'obstacles à la propagation uniforme de chaleur au sein de l'enveloppe, diminuant son efficacité de refroidissement.

On connaît aussi un brûleur dans lequel les canaux de refroidissement se terminent dans une matrice de refroidissement réalisée à l'intérieur de l'ajutage, l'ensemble étant fabriqué par un système d'impression en 3D (voir DE 10 2016 211 477 A1). Un brûleur selon ce document antérieur nécessite un temps important pour sa réalisation, en effet seulement une pièce peut être imprimée en 3D avant la suivante, ce qui n'est pas envisageable industriellement. De plus, les transferts de chaleur sont fortement pénalisés à cause du manque de compacité de la matière et de la qualité métallurgique moindre. En outre, l'état de surface du brûleur selon ce document est peu maîtrisable.

Enfin certains dispositifs présentent des enveloppes tubulaires formées de deux manchons qui s'emboîtent l'un dans l'autre et qui sont façonnés de manière à former entre eux des gorges axiales qui peuvent éventuellement communiquer de manière arrondie (voir JP 2015 161460 A et WO 2011/044676). A nouveau ces dispositifs présentent de grandes surfaces de jonction fragiles mécaniquement et isolantes thermiquement.

La présente invention a pour but de résoudre les problèmes présentés par les organes d'injection de gaz selon la technique antérieure et en particulier d'augmenter leur durée de vie, tout en garantissant simultanément un transfert thermique élevé pour tout débit de fluide de refroidissement.

Dans ce but, il est prévu, suivant l'invention, un organe d'injection de gaz, tel que décrit dans le préambule de cette description et dans lequel la paroi tubulaire est monobloc, lesdits canaux axiaux traversant axialement cette paroi tubulaire monobloc qui présente, à la terminaison distale des canaux axiaux, une rainure circonférentielle, l'organe d'injection comprenant en outre une couronne de fermeture obturant ladite rainure circonférentielle de la paroi tubulaire monobloc, lesdits canaux de liaison de forme arrondie étant agencés entre ladite rainure circonférentielle et ladite couronne de fermeture.

Avantageusement, ladite couronne de fermeture peut être formée d'au moins deux éléments de couronne.

Par paroi tubulaire monobloc, il faut entendre que la paroi tubulaire rainurée de l'organe d'injection suivant l'invention est d'une pièce. La couronne prévue pour fermer la rainure de la paroi tubulaire est ainsi englobée dans le corps d'une pièce de la paroi tubulaire monobloc.

Lorsque la rainure est obturée par la couronne de fermeture, il y a continuité métallique entre celle-ci et le reste de la paroi tubulaire.

Par l'enveloppe compacte formée par la paroi tubulaire monobloc, on obtient une continuité de conduction de chaleur, sans résistance thermique issue d'interfaces, frettées par exemple. La répartition de température est donc plus homogène et le flux de chaleur plus important. Le matériau de haute conductivité formant la paroi monobloc, comme du cuivre de haute pureté par exemple, permet d'amener rapidement une grande quantité de chaleur de la source chaude (la paroi monobloc) à la source froide (le circuit d'eau intégré). Ceci a pour conséquence un transfert élevé de chaleur au circuit fluide et donc une température moindre et plus uniforme du matériau de la paroi monobloc. L'érosion de celle-ci s'en trouve donc ralentie, ce qui augmente sa durée de vie.

En outre, la paroi tubulaire monobloc suivant l'invention permet avantageusement de diminuer substantiellement le phénomène de fissuration qui se produit généralement aux surfaces de jonction des différents composants de l'extrémité de l'organe d'injection de gaz. Suivant l'invention, les canaux axiaux, par exemple forés longitudinalement dans la paroi tubulaire, nécessitent, pour permettre une communication entre eux, le creusement d'une rainure circonférentielle de faible surface et ensuite la fermeture de cette rainure par une couronne. La surface de jonction entre la rainure et la couronne est faible, elle est localisée à la périphérie de la paroi tubulaire monobloc et elle est encadrée par la pleine matière de celle-ci. Les contraintes thermiques, suite à la dilatation du corps, sont principalement radiales. Elles sont donc dans le plan de jonction alors que ce sont principalement les contraintes perpendiculaires au plan de jonction qui sont capables de provoquer des fissurations. Enfin, les jonctions étant encadrées par la matière pleine de la paroi tubulaire monobloc bénéficient de ce fait d'un renfort supplémentaire.

Par ailleurs pour assurer un refroidissement efficace de la paroi tubulaire tout au long du parcours du fluide de refroidissement, il est essentiel d'éviter le phénomène de moussage du fluide de refroidissement, la mousse formée étant isolante thermiquement. Ce moussage est produit lors de la présence d'accidents de forme dans le parcours du fluide de refroidissement. Par leur forme arrondie orientée en direction de l'extrémité distale de la paroi tubulaire les canaux de liaison du système de refroidissement suivant l'invention évitent des changements de sens de déplacement brutaux et limitent aussi des pertes de charge et des instabilités. Par forme arrondie, il faut entendre, suivant l'invention, une transition douce entre l'extrémité de deux canaux axiaux. Cette forme permet de ne pas devoir contourner d'arêtes franches ou vives. Elle peut être obtenue aisément par façonnage du fond de la rainure circonférentielle, des éléments de couronne servant à la fermeture de la rainure ou simultanément de tous ces composants.

Par extrémité distale de la paroi tubulaire il faut entendre, suivant l'invention, l'extrémité de la paroi tubulaire de l'organe d'injection de gaz qui est opposée à son extrémité de fixation sur un four ou un brûleur par exemple, celle-ci étant appelée extrémité proximale.

Par canaux axiaux, il faut entendre des canaux qui s'étendent parallèlement à l'axe de la paroi tubulaire.

Avantageusement lesdits canaux de liaison ont une forme d'arc de cercle, d'ellipse ou de parabole. Ces formes ne sont toutefois pas limitatives.

Cette forme particulière arrondie des canaux de liaison permet une conduction stable du fluide autorisant des vitesses d'écoulement élevées et donc des nombres de Reynolds élevés, sans pour autant rencontrer et augmenter des pertes de charge et instabilités, comme cela est causé en présence d'accidents de forme. Il est ainsi possible de mettre en œuvre un régime d'écoulement turbulent, c'est-à-dire à haut nombre de Reynolds, obtenu pour une vitesse élevée du fluide parcourant le circuit. Ce type d'écoulement favorise des échanges thermiques intenses au sein du fluide et prévient tout épaississement démesuré des couches limites cinétique et thermique à l'interface métal/fluide. Ceci garantit un gradient thermique élevé entre le fluide froid et le métal chaud, favorisant l'extraction de chaleur hors de celui-ci. Cela évite aussi la création d'une couche d'eau moussante, laquelle est isolante, au contact de la paroi tubulaire, apparaissant en cas d'élévation de température.

Suivant une forme particulière de réalisation de l'invention, l'organe d'injection de gaz forme un injecteur de brûleur pourvu de ladite paroi tubulaire monobloc dans laquelle est logé ledit système de refroidissement. C'est le cas en particulier de brûleurs donnant lieu à la formation d'une flamme, qui sont utilisés par exemple lors de la fusion de mitrailles.

Suivant une autre forme de l'invention, l'organe d'injection de gaz forme un fourreau pourvu de ladite paroi tubulaire monobloc dans laquelle est logé ledit système de refroidissement. Il est fréquent que l'extrémité d'un brûleur doive être recouverte au moins partiellement par un fourreau. Il peut s'agir d'un organe séparé du brûleur qui est adaptable sur l'extrémité de l'injecteur.

Suivant encore une autre forme de réalisation de l'invention, ledit fourreau est agencé à une extrémité d'un injecteur de brûleur, en recouvrant au moins partiellement celle-ci. L'organe d'injection de gaz forme donc alors un ensemble brûleur-fourreau qui peut être un organe monobloc.

En saillie sur l'extrémité de l'injecteur, le fourreau forme une chambre de mélange où par exemple un mélange de gaz donnant lieu à une flamme peut avoir lieu, mais aussi où de l'oxygène supersonique peut être projeté, ce qui représente un brûleur combiné.

Suivant une forme de l'invention, des canaux de passage relient en outre circonférentiellement des canaux axiaux à leur extrémité proximale.

Ces canaux de passage peuvent aussi avoir une forme arrondie, mais dans la direction opposée à l'extrémité distale de la paroi tubulaire.

Avantageusement, la paroi tubulaire monobloc présente, à ladite terminaison proximale des canaux axiaux, une rainure circonférentielle additionnelle, l'organe d'injection comprenant en outre une couronne de fermeture additionnelle formée d'au moins deux éléments de couronne, qui obture la rainure circonférentielle additionnelle de la paroi tubulaire monobloc, lesdits canaux de passage étant agencés entre ladite rainure circonférentielle additionnelle et lesdits au moins deux éléments de la couronne de fermeture additionnelle.

Suivant une autre forme de réalisation de l'invention, la paroi tubulaire monobloc se présente, entre ladite terminaison proximale des canaux axiaux et l'extrémité proximale de la paroi tubulaire, sous la forme d'un embout de moindre épaisseur, l'organe d'injection comprenant en outre une bride qui est emmanchée sur l'embout de la paroi tubulaire monobloc, lesdits canaux de passage étant agencés entre ledit embout et ladite bride.

Ces canaux de passage peuvent être obtenus aisément par façonnage du fond de la rainure circonférentielle additionnelle, des éléments de couronne servant à la fermeture de la rainure additionnelle ou simultanément de tous ces composants. Dans le cas de l'emmanchement d'une bride sur un embout de la paroi tubulaire monobloc, les canaux de passage peuvent être façonnés sur l'embout, dans la bride ou sur les deux éléments simultanément.

Suivant une forme perfectionnée de réalisation de l'invention le système de refroidissement est composé d'au moins un serpentin de refroidissement comprenant plusieurs canaux axiaux disposés parallèlement en succession dans la paroi tubulaire et reliés entre eux successivement par un canal de liaison, puis par un canal de passage, puis à nouveau par un canal de liaison, et ainsi de suite. Avantageusement chaque serpentin de refroidissement comprend pour le fluide de refroidissement une entrée et une sortie agencées dans la paroi tubulaire à distance de l'extrémité distale de celle-ci. En particulier, le système de refroidissement comporte deux serpentins de refroidissement couvrant chacun une moitié de la paroi tubulaire de l'organe d'injection de gaz.

Suivant une forme particulière de l'invention ladite extrémité distale de la paroi tubulaire présente une partie plus intensément sollicitée thermiquement, et le ou les canaux axiaux alimentés directement par ladite entrée de fluide de refroidissement aboutissent dans cette partie plus intensément sollicitée thermiquement.

De cette manière le fluide de refroidissement froid d'entrée est dirigé directement dans les zones les plus appropriées qui doivent le plus être protégées, tandis que le fluide de refroidissement ayant déjà été chauffé par échange thermique circule, avant la sortie, dans les canaux axiaux agencés dans la partie moins intensément sollicitée thermiquement de la paroi tubulaire.

Avantageusement, les canaux axiaux, les canaux de liaison et les canaux de passage présentent une section débitante constante. Cette section constante des canaux évite des variations perturbatrices de l'écoulement.

De préférence, ledit au moins un gaz projeté est choisi parmi le groupe constitué de l'oxygène, de l'oxygène supersonique, de l'air, des gaz carbonés, de l'azote et de leurs mélanges, ces gaz pouvant se présenter sous forme d'une flamme à la suite de leur combustion. Avantageusement, la paroi tubulaire est en cuivre ou en alliage de cuivre.

La présente invention est également relative à un four muni d'au moins un organe d'injection de gaz suivant l'invention.

L'invention concerne aussi l'utilisation d'au moins un organe d'injection de gaz suivant l'invention, pour le traitement d'un matériau métallique dans un four, notamment pour la fusion de mitrailles, l'affinage d'acier dans un four électrique ou le réchauffage de brames.

D'autres détails et particularités de l'invention ressortiront de la description donnée ci-après, à titre non limitatif, d'un exemple de réalisation d'organe d'injection de gaz suivant l'invention, illustré dans les dessins annexés.
La figure 1 représente une vue de profil d'un organe d'injection de gaz suivant l'invention.
La figure 2 représente une vue en coupe transversale suivant la ligne II-II de l'organe d'injection de gaz de la figure 1, à l'échelle agrandie.
La figure 3 représente une vue en coupe transversale suivant la ligne III-III de l'organe d'injection de gaz de la figure 1, à l'échelle agrandie.
La figure 4 représente une vue en coupe transversale suivant la ligne IV-IV de l'organe d'injection de gaz de la figure 1, à l'échelle agrandie et sous forme explosée.
La figure 5 représente une vue frontale de l'extrémité de l'organe d'injection de gaz suivant la figure 1, à l'échelle agrandie.
La figure 6 représente une vue en coupe suivant la ligne VI-VI de la figure 5.

L'organe d'injection de gaz illustré sur les figures est un brûleur muni d'un fourreau. Il comprend un injecteur tubulaire 1 dont l'ouverture d'extrémité est recouverte partiellement par un fourreau désigné d'une manière générale par la référence 2. Celui-ci présente une paroi tubulaire monobloc 3 qui forme, autour de l'injecteur, une enveloppe qui, ainsi qu'il est illustré sur les figures, est refroidie par un système de refroidissement.

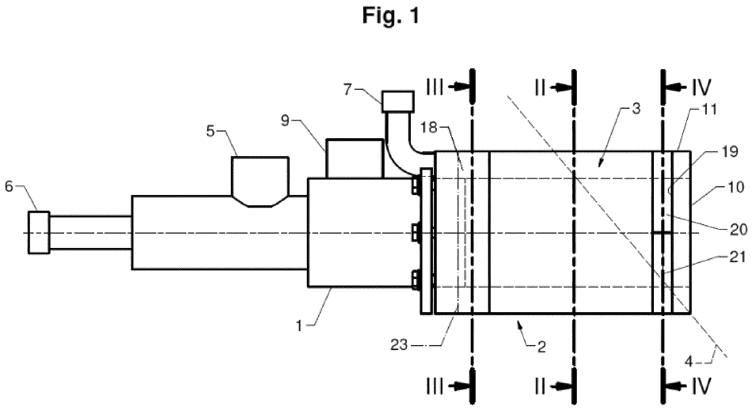

Sur la figure 1, la paroi verticale du four, sur laquelle est agencé le brûleur de manière inclinée, est illustrée de manière schématique par la ligne interrompue 4.

L'injecteur du brûleur est alimenté en combustible, par exemple en gaz naturel, par l'entrée 5 et en comburant, par exemple en oxygène technique, par l'entrée 9. En fonctionnement, une flamme se forme dans la chambre de mélange renfermée par la paroi tubulaire 3 et sort par une ouverture 10 prévue à l'extrémité distale 11 de celle-ci. De l'oxygène supersonique peut en outre être éventuellement alimenté dans l'injecteur 1 par le conduit d'alimentation 6.

Dans l'exemple illustré sur ces figures, le système de refroidissement du fourreau 2 comporte un conduit d'alimentation 7 pour un fluide de refroidissement et un conduit d'évacuation 8 de celui-ci.

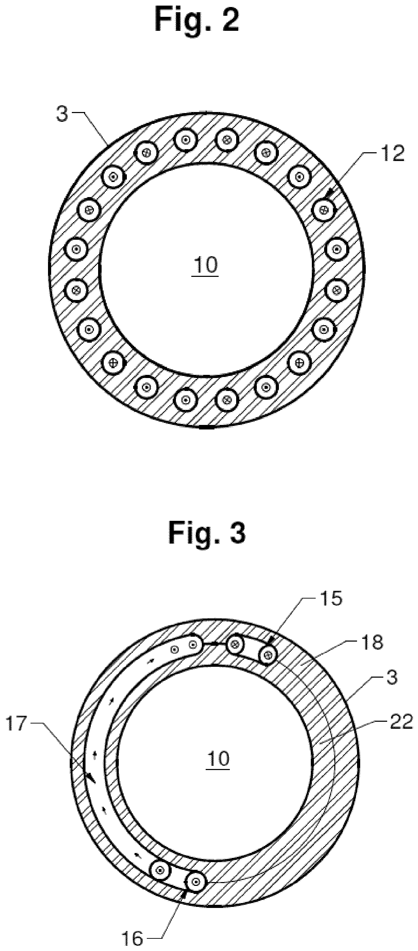

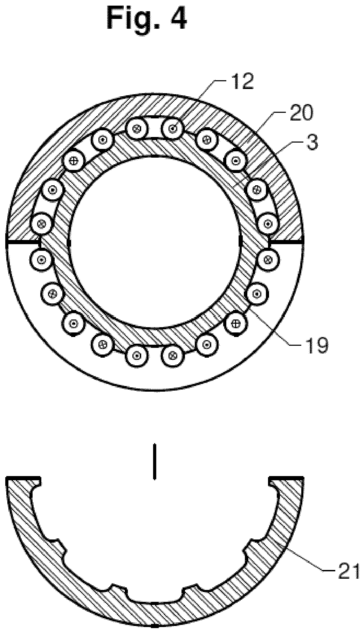

Ainsi qu'il ressort des figures 2, 4 et 6, le système de refroidissement comporte plusieurs canaux axiaux 12 qui s'étendent axialement vers l'extrémité distale 11 de la paroi tubulaire. Dans ces canaux circule le fluide de refroidissement, par exemple de l'eau, qui provient du conduit d'alimentation 7 et se dirige ensuite vers le conduit d'évacuation 8. Ces canaux sont forés dans le corps de la paroi tubulaire monobloc.

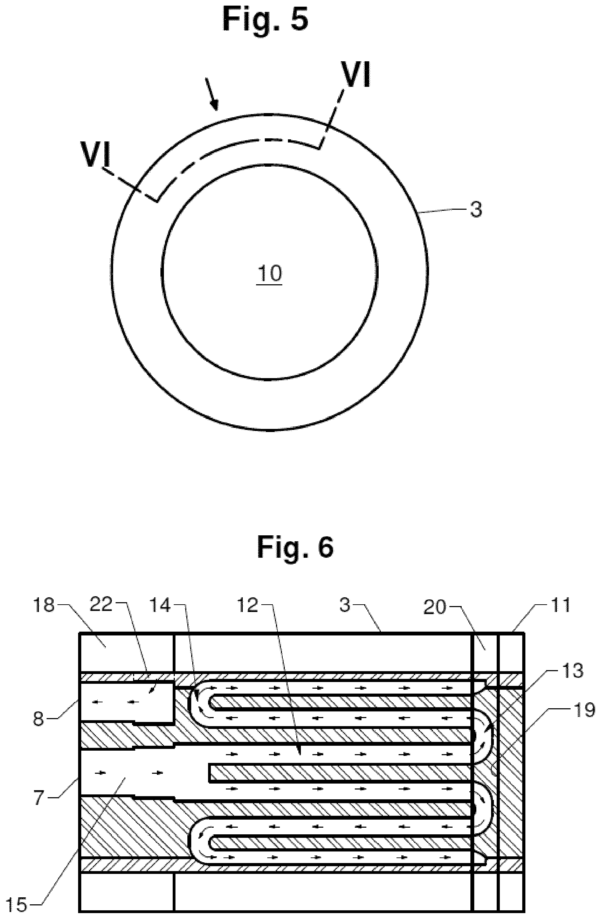

Des canaux axiaux circonférentiellement voisins sont, à l'extrémité distale 11 de la paroi tubulaire 3, reliés par des canaux de liaison 13 qui ont une forme arrondie en direction de cette extrémité. Dans l'exemple illustré sur la figure 6, les canaux de liaison 13 ont une forme arrondie et assurent ainsi une transition douce entre les canaux axiaux qu'ils relient.

A distance de l'extrémité distale 11 de la paroi tubulaire, c'est-à-dire davantage à proximité de la paroi du four, des canaux axiaux circonférentiellement voisins sont reliés par des canaux de passage 14 qui ont une forme légèrement arrondie en direction opposée à l'extrémité distale 11 précitée.

Dans l'exemple illustré, les canaux axiaux 12 disposés en succession à la périphérie de la paroi tubulaire 3 sont reliés entre eux successivement par un canal de liaison arrondi 13, puis par un canal de passage arrondi 14, puis à nouveau par un canal de liaison arrondi 13, et ainsi de suite, de manière à former au moins un serpentin de refroidissement dans la paroi tubulaire 3. La communication entre les canaux axiaux s'effectue de manière individuelle, de proche en proche, sans nécessiter de canaux co-axiaux générateurs de moussage, ni de rencontres entre plusieurs canaux.

Dans l'exemple illustré, en particulier si l'on se réfère aux figures 3 et 6, on peut observer que le conduit d'alimentation 7 pour le fluide de refroidissement débouche en face de l'entrée 15 de deux canaux axiaux 12 de façon à alimenter de cette manière deux serpentins de refroidissement couvrant chacun une moitié de la paroi tubulaire 3. Sur la figure 5, la flèche indique l'emplacement du conduit d'alimentation 7 à l'arrière de la paroi tubulaire. Les deux sorties 16 de ces serpentins débouchent dans un canal périphérique 17 qui se termine en face du conduit d'évacuation 8 pour le fluide de refroidissement. Les canaux forment ainsi deux circuits de refroidissement, répartis en zones circonférentielles distinctes au sein de la paroi tubulaire. Ces circuits sont alimentés par une même source de fluide, le conduit 7, et se terminent dans une même décharge, le conduit 8.

Ainsi qu'il ressort en particulier des figures 1, 4 et 6, la paroi tubulaire est monobloc et présente, dans l'exemple de réalisation illustré, une rainure circonférentielle 19 à la terminaison distale des canaux axiaux 12. Cette rainure est obturée par une couronne de fermeture formée, dans l'exemple illustré, de deux demi-couronnes 20 et 21. Les canaux de liaison 13 sont, dans l'exemple illustré, façonnés pour une part dans le fond de la rainure circonférentielle 19 et pour une autre part à l'intérieur des demi-couronnes 20 et 21. On pourrait évidemment aussi prévoir leur agencement uniquement au fond de la rainure ou uniquement à l'intérieur des demi-couronnes.

Cet agencement monobloc à l'extrémité de l'organe d'injection de gaz suivant l'invention, dans la partie la plus sollicitée mécaniquement et thermiquement de celui-ci, permet de réduire au minimum la rupture de continuité métallique et de produire ainsi une excellente capacité d'équilibrage du champ de température dans l'alliage métallique utilisé, avec un transfert rapide des calories de la source de chaleur au liquide de refroidissement. Par l'incorporation des demi-couronnes 20 et 21 radialement dans la rainure circonférentielle 19, c'est-à-dire dans la matière pleine de la paroi tubulaire monobloc 3, on obtient un agencement très résistant à la fissuration, qui simultanément permet un écoulement optimisé du fluide dans le système de refroidissement.

Pendant le fonctionnement du four, l'extrémité distale 11 de la paroi tubulaire 3 est particulièrement sollicitée thermiquement non seulement par les sources de chaleur issues du four, par exemple le bain métallique en fusion ou les arcs électriques, mais aussi par la flamme présente dans la cavité de l'injecteur du brûleur. Par l'agencement incliné du brûleur sur la paroi réfractaire du four, une partie de l'extrémité distale de la paroi tubulaire 3 du fourreau fait davantage saillie dans le four et est par conséquent plus particulièrement sollicitée thermiquement.

Dans l'exemple illustré, le conduit d'alimentation 7 pour le fluide de refroidissement est agencé de manière à alimenter directement deux canaux axiaux 12 disposés dans cette partie en saillie de la paroi tubulaire 3. De cette manière, les deux canaux axiaux 12 aboutissent chacun directement dans la partie la plus sollicitée thermiquement de l'extrémité distale de la paroi tubulaire. Ils forment le départ de deux serpentins de refroidissement et permettent la localisation du fluide de refroidissement entrant et donc « froid » aux endroits les plus sollicités.

Ainsi qu'il ressort en particulier des figures 1, 3 et 6, à son extrémité proximale, la paroi tubulaire monobloc se présente sous la forme d'un embout 22 de plus faible épaisseur. Sur cet embout est emmanché une bride 18. Dans l'exemple illustré, les canaux de passage 14, ainsi que l'entrée 15 et la sortie 16 menant aux conduits d'alimentation 7 et d'évacuation 8 sont façonnés pour une part à la surface de l'embout 22 et pour une autre part à l'intérieur de la bride. On pourrait évidemment aussi prévoir leur agencement uniquement dans la bride 18 ou uniquement à l'intérieur de l'embout 22.

On pourrait aussi envisager un agencement consistant en une rainure additionnelle 23 comparable à la rainure 19 et en une couronne formée de deux ou plusieurs éléments de couronne comparables aux demi-couronnes 20 et 21. L'emplacement éventuel de cette rainure additionnelle est représentée en traits mixtes sur la figure 1.

Il doit être entendu que la présente invention n'est en aucune façon limitée à la forme de réalisation décrite ci-dessus et qu'elle peut être modifiée dans le cadre des revendications annexées.

On peut par exemple prévoir un seul serpentin ou trois serpentins de refroidissement ou davantage.

Par la répartition d'un nombre libre de circuits de refroidissement, dont la section des canaux peut être librement dimensionnée, il est possible d'ajuster la vitesse du fluide pour une gamme de débits du fluide de refroidissement très large et donc un haut nombre de Reynolds auquel le coefficient d'échange thermique est directement lié.

## Revendications

1. Organe d'injection de gaz comprenant
- une paroi tubulaire (3) susceptible d'être sollicitée thermiquement et présentant une extrémité proximale et une extrémité distale (11),
- à cette extrémité distale, au moins une ouverture d'extrémité (10) par laquelle au moins un gaz est projeté, et
- un système de refroidissement qui est logé dans ladite paroi tubulaire (3) et comporte des canaux axiaux (12) qui, entre une terminaison proximale et une terminaison distale, s'étendent axialement vers ladite extrémité distale (11) de la paroi tubulaire et dans lesquels un fluide de refroidissement est amené à circuler, des canaux de liaison (13) reliant circonférentiellement entre eux des canaux axiaux susdits(12) à leur terminaison distale, ces canaux de liaison présentant une forme arrondie en direction de l'extrémité distale de la paroi tubulaire,
- La paroi tubulaire (3) étant monobloc, lesdits canaux axiaux (12) traversant axialement cette paroi tubulaire monobloc,
**caractérisé en ce que** la paroi tubulaire monobloc présente,
à la terminaison distale des canaux axiaux, une rainure circonférentielle, **en ce que** l'organe d'injection comporte en outre une couronne de fermeture obturant la rainure circonférentielle de la paroi tubulaire monobloc et **en ce que** lesdits canaux de liaison (13) de forme arrondie sont agencés entre ladite rainure circonférentielle et ladite couronne de fermeture.

2. Organe d'injection de gaz suivant la revendication 1, **caractérisé en ce qu'**il forme un injecteur de brûleur pourvu de ladite paroi tubulaire monobloc dans laquelle est logé ledit système de refroidissement.

3. Organe d'injection de gaz suivant la revendication 1, **caractérisé en ce qu'**il forme un fourreau (2) pourvu de ladite paroi tubulaire monobloc dans laquelle est logé ledit système de refroidissement.

4. Organe d'injection de gaz suivant la revendication 3, **caractérisé en ce que** ledit fourreau (2) est agencé à une extrémité d'un injecteur (1) de brûleur, en recouvrant au moins partiellement celle-ci.

5. Organe d'injection de gaz suivant l'une ou l'autre des revendications 1 à 4, **caractérisé en ce que** le système de refroidissement comprend des canaux de passage (14) qui relient circonférentiellement des canaux axiaux (12) à leur terminaison proximale.

6. Organe d'injection de gaz suivant la revendication 5, **caractérisé en ce que** les canaux de passage (14) qui relient circonférentiellement des canaux axiaux (12) ont une forme arrondie dans une direction opposée à l'extrémité distale (11) susdite de la paroi tubulaire (3).

7. Organe d'injection de gaz suivant l'une ou l'autre des revendications 5 et 6, **caractérisé en ce que** la paroi tubulaire monobloc (3) se présente, entre ladite terminaison proximale des canaux axiaux (12) et l'extrémité proximale de la paroi tubulaire (3), sous la forme d'un embout (22) de moindre épaisseur, **en ce que** l'organe d'injection comprend en outre une bride (18) emmanchée sur ledit embout de la paroi tubulaire monobloc et **en ce que** lesdits canaux de passage (14) sont agencés entre ledit embout (22) et ladite bride (18).

8. Organe d'injection de gaz suivant l'une ou l'autre des revendications 5 et 6, **caractérisé en ce que** la paroi tubulaire monobloc (3) présente, à ladite terminaison proximale des canaux axiaux (12), une rainure circonférentielle additionnelle (23), **en ce que** l'organe d'injection comprend en outre une couronne de fermeture additionnelle, de préférence formée d'au moins deux éléments de couronne, qui obture la rainure circonférentielle additionnelle de la paroi tubulaire monobloc et **en ce que** lesdits canaux de passage (14) sont agencés entre ladite rainure circonférentielle additionnelle et ladite couronne de fermeture additionnelle.

9. Organe d'injection de gaz suivant l'une ou l'autre des revendications 5 à 8, **caractérisé en ce que** le système de refroidissement est composé d'au moins un serpentin de refroidissement comprenant plusieurs canaux axiaux (12) disposés parallèlement en succession dans la paroi tubulaire (3) et reliés entre eux successivement par un canal de liaison (13), puis par un canal de passage (14), puis à nouveau par un canal de liaison (13), et ainsi de suite.

10. Organe d'injection de gaz suivant la revendication 9, **caractérisé en ce que** chaque serpentin de refroidissement comprend pour le fluide de refroidissement une entrée (15) et une sortie (16) agencées dans la paroi tubulaire (3) à distance de l'extrémité distale (11) de celle-ci.

11. Organe d'injection de gaz suivant l'une quelconque des revendications 5 à 10, **caractérisé en ce que** les canaux axiaux (12), les canaux de liaison (13) et les canaux de passage (14) présentent une section débitante sensiblement constante.

12. Organe d'injection de gaz suivant l'une quelconque des revendications 9 à 11, **caractérisé en ce que** le système de refroidissement comporte deux serpentins de refroidissement couvrant chacun une moitié de la paroi tubulaire de l'organe d'injection.

13. Organe d'injection de gaz suivant l'une quelconque des revendications 1 à 12, **caractérisé en ce que** ledit au moins un gaz projeté est choisi parmi le groupe constitué de l'oxygène, de l'oxygène supersonique, de l'air, des gaz carbonés, de l'azote et de leurs mélanges, ces gaz pouvant se présenter sous forme d'une flamme à la suite de leur combustion.

14. Organe d'injection de gaz suivant l'une quelconque des revendications 1 à 13, **caractérisé en ce que** ladite couronne de fermeture comprend au moins deux éléments de couronne.

15. Four muni d'au moins un organe d'injection de gaz suivant l'une quelconque des revendications 1 à 14.

16. Utilisation d'au moins un organe d'injection de gaz suivant l'une quelconque des revendications 1 à 15, pour le traitement d'un matériau métallique dans un four.

17. Utilisation suivant la revendication 16 pour la fusion de mitrailles, l'affinage d'acier dans un four électrique ou le réchauffage de brames.

## Patentansprüche

1. Gasinjektionselement, umfassend
- eine ringförmige Wand (3), die geeignet ist, thermisch beansprucht zu werden und ein proximales Ende und ein distales Ende (11) aufweist,
- an diesem distalen Ende, mindestens eine Endöffnung (10), durch die mindestens ein Gas ausgestoßen wird, und
- ein Kühlsystem, das in der ringförmigen Wand (3) aufgenommen ist und axiale Kanäle (12) umfasst, die sich zwischen einem proximalen Abschlussende und einem distalen Abschlussende axial zu dem distalen Ende (11) der ringförmigen Wand erstrecken und in denen ein Kühlmittel dazu gebracht wird, zu zirkulieren, wobei Verbindungskanäle (13) die axialen Kanäle (12) an ihrem distalen Abschlussende untereinander umfänglich verbinden, wobei diese Verbindungskanäle in Richtung des distalen Endes der ringförmigen Wand eine abgerundete Form aufweisen,
- wobei die ringförmige Wand (3) einstückig ist, wobei die axialen Kanäle (12) diese einstückige ringförmige Wand axial durchqueren,
**dadurch gekennzeichnet, dass** die einstückige ringförmige Wand Folgendes aufweist
am distalen Abschlussende der axialen Kanäle, eine Umfangsnut, und dadurch, dass das Injektionselement weiter einen Verschlusskranz umfasst, der die Umfangsnut der einstückigen ringförmigen Wand verschließt, und dadurch, dass die Verbindungskanäle (13) mit abgerundeter Form zwischen der Umfangsnut und dem Verschlusskranz eingerichtet sind.

2. Gasinjektionselement nach Anspruch 1, **dadurch gekennzeichnet, dass** es einen Brennerinjektor bildet, der mit der einstückigen ringförmigen Wand versehen ist, in der das Kühlsystem aufgenommen ist.

3. Gasinjektionselement nach Anspruch 1, **dadurch gekennzeichnet, dass** es eine Ummantelung (2) bildet, die mit der einstückigen ringförmigen Wand versehen ist, in der das Kühlsystem aufgenommen ist.

4. Gasinjektionselement nach Anspruch 3, **dadurch gekennzeichnet, dass** die Ummantelung (2) an einem Ende eines Brennerinjektors (1) eingerichtet ist, indem sie dieses mindestens teilweise bedeckt.

5. Gasinjektionselement nach einem der Ansprüche 1 bis 4, **dadurch gekennzeichnet, dass** das Kühlsystem Durchgangskanäle (14) umfasst, die axiale Kanäle (12) an ihrem proximalen Abschlussende umfänglich verbinden.

6. Gasinjektionselement nach Anspruch 5, **dadurch gekennzeichnet, dass** die Durchgangskanäle (14), die axiale Kanäle (12) umfänglich verbinden, in einer Richtung entgegengesetzt zum distalen Ende (11) der ringförmigen Wand (3) eine abgerundete Form aufweisen.

7. Gasinjektionselement nach einem der Ansprüche 5 und 6, **dadurch gekennzeichnet, dass** die einstückige ringförmige Wand (3) zwischen dem proximalen Abschlussende der axialen Kanäle (12) und dem proximalen Ende der ringförmigen Wand (3) sich in Form eines Ansatzstücks (22) mit geringerer Dichte darstellt, und dadurch, dass das Injektionselement weiter einen auf dem Ansatzstück der einstückigen ringförmigen Wand aufgesetzten Flansch (18) umfasst, und dadurch, dass die Durchgangskanäle (14) zwischen dem Ansatzstück (22) und dem Flansch (18) eingerichtet sind.

8. Gasinjektionselement nach einem der Ansprüche 5 und 6, **dadurch gekennzeichnet, dass** die einstückige ringförmige Wand (3) am proximalen Abschlussende der axialen Kanäle (12) eine zusätzliche Umfangsnut (23) aufweist, dadurch, dass das Injektionselement weiter einen zusätzlichen, vorzugsweise aus mindestens zwei Kranzteilen gebildeten Verschlusskranz umfasst, der die zusätzliche Umfangsnut der einstückigen ringförmigen Wand verschließt, und dadurch, dass die Durchgangskanäle (14) zwischen der zusätzlichen Umfangsnut und dem zusätzlichen Verschlusskranz eingerichtet sind.

9. Gasinjektionselement nach einem der Ansprüche 5 bis 8, **dadurch gekennzeichnet, dass** das Kühlsystem aus mindestens einer Kühlspirale besteht, die mehrere axiale Kanäle (12) umfasst, die sukzessiv parallel in der ringförmigen Wand (3) angeordnet sind und durch einen Verbindungskanal (13), dann durch einen Durchgangskanal (14), dann wieder durch einen Verbindungskanal (13) und so weiter sukzessiv untereinander verbunden sind.

10. Gasinjektionselement nach Anspruch 9, **dadurch gekennzeichnet, dass** jede Kühlspirale einen Einlass (15) und einen Auslass (16) für das Kühlfluid umfasst, die in der ringförmigen Wand (3) in einem Abstand zu dem distalen Ende (11) von dieser eingerichtet sind.

11. Gasinjektionselement nach einem beliebigen der Ansprüche 5 bis 10, **dadurch gekennzeichnet, dass** die axialen Kanäle (12), die Verbindungskanäle (13) und die Durchgangskanäle (14) einen im Wesentlichen konstanten Auslassquerschnitt aufweisen.

12. Gasinjektionselement nach einem beliebigen der Ansprüche 9 bis 11, **dadurch gekennzeichnet, dass** das Kühlsystem zwei Kühlspiralen umfasst, die jeweils eine Hälfte der ringförmigen Wand des Injektionselements bedecken.

13. Gasinjektionselement nach einem beliebigen der Ansprüche 1 bis 12, **dadurch gekennzeichnet, dass** das mindestens eine ausgestoßene Gas aus der Gruppe ausgewählt ist, die aus Sauerstoff, supersonischem Sauerstoff, Luft, kohlenstoffhaltigen Gasen, Stickstoff und ihren Gemischen ausgewählt ist, wobei diese Gase in Form einer Flamme infolge ihrer Verbrennung vorliegen können.

14. Gasinjektionselement nach einem beliebigen der Ansprüche 1 bis 13, **dadurch gekennzeichnet, dass** der Verschlusskranz mindestens zwei Kranzteile umfasst.

15. Ofen, der mit mindestens einem Gasinjektionselement nach einem beliebigen der Ansprüche 1 bis 14 ausgestattet ist.

16. Verwendung mindestens eines Gasinjektionselements nach einem beliebigen der Ansprüche 1 bis 15 zur Verarbeitung eines metallischen Werkstoffs in einem Ofen.

17. Verwendung nach Anspruch 16 zur Schmelze von Metallabfall, Veredelung von Stahl in einem elektrischen Ofen oder Erwärmen von Brammen.

## Claims

1. Gas injection member having
- a tubular wall (3) that is able to be thermally stressed and having a proximal end and a distal end (11),
- at this distal end, at least one end opening (10) through which at least one gas is sprayed, and
- a cooling system which is housed in said tubular wall (3) and comprises axial channels (12) which, between a proximal end and a distal end, extend axially toward said distal end (11) of the tubular wall and wherein a cooling fluid is caused to circulate, connection channels (13) which circumferentially connect above-said axial channels (12) together to their distal end, these connection channels having a rounded shape in the direction of the distal end of the tubular wall,
- The tubular wall (3) being one-piece, said axial channels (12) axially passing through this one-piece tubular wall,
**characterised in that** the one-piece tubular wall has,
at the distal end of the axial channels, a circumferential groove, **in that** the injection member further comprises a closing crown blocking the circumferential groove of the one-piece tubular wall and **in that** said connection channels (13) of rounded shape are arranged between said circumferential groove and said closing crown.

2. Gas injection member according to claim 1, **characterised in that** it forms a burner injector provided with said one-piece tubular wall wherein is housed said cooling system.

3. Gas injection member according to claim 1, **characterised in that** it forms a sheath (2) provided with said one-piece tubular wall wherein is housed said cooling system.

4. Gas injection member according to claim 3, **characterised in that** said sheath (2) is arranged at an end of the burner injector (1), by covering it at least partially.

5. Gas injection member according to either of claims 1 to 4, **characterised in that** the cooling system comprises passage channels (14) which circumferentially connect the axial channels (12) at their proximal end.

6. Gas injection member according to claim 5, **characterised in that** the passage channels (14) which circumferentially connect the axial channels (12) have a rounded shape in a direction opposite the above-said distal end (11) of the tubular wall (3).

7. Gas injection member according to either of claims 5 and 6, **characterised in that** the one-piece tubular wall (3) is presented, between said proximal end of the axial channels (12) and the proximal end of the tubular wall (3), in the form of a thinner nozzle (22), **in that** the injection member further comprises a flange (18) fitted on said nozzle of the one-piece tubular wall and **in that** said passage channels (14) are arranged between said nozzle (22) and said flange (18).

8. Gas injection member according to either of claims 5 and 6, **characterised in that** the one-piece tubular wall (3) has, at said proximal end of the axial channels (12), an additional circumferential groove (23), **in that** the injection member further comprises an additional closing crown, preferably formed of at least two crown elements, which blocks the additional circumferential groove of the one-piece tubular wall and **in that** said passage channels (14) are arranged between said additional circumferential groove and said additional closing crown.

9. Gas injection member according to either of claims 5 to 8, **characterised in that** the cooling system is composed of at least one cooling coil comprising several axial channels (12) disposed parallel in succession in the tubular wall (3) and connected together successively by a connection channel (13), then by a passage channel (14), then again by a connection channel (13), and so on.

10. Gas injection member according to claim 9, **characterised in that** each cooling coil comprises, for the cooling fluid, an inlet (15) and an outlet (16) arranged in the tubular wall (3) remotely from its distal end (11).

11. Gas injection member according to any one of claims 5 to 10, **characterised in that** the axial channels (12), the connection channels (13) and the passage channels (14) have a substantially constant spouting section.

12. Gas injection member according to any one of claims 9 to 11, **characterised in that** the cooling system comprises two cooling coils, each covering half of the tubular wall of the injection member.

13. Gas injection member according to any one of claims 1 to 12, **characterised in that** said at least one sprayed gas is chosen from among the group constituted of oxygen, supersonic oxygen, air, carbonated gases, nitrogen and their mixtures, these gases being able to be presented in the form of a flame following their combustion.

14. Gas injection member according to any one of claims 1 to 13, **characterised in that** said closing crown comprises at least two crown elements.

15. Furnace provided with at least one gas injection member according to any one of claims 1 to 14.

16. Use of at least one gas injection member according to any one of claims 1 to 15, for the treatment of a metal material in a furnace.

17. Use according to claim 16 for melting scrap metal, refining steel in an electric furnace or heating slabs.
